# EUROPÄISCHE PATENTSCHRIFT

(11) **EP 0 659 703 B1**
(45) Veröffentlichungstag und Bekanntmachung des Hinweises auf die Patenterteilung: **04.06.1997**
(21) Anmeldenummer: 95101936.3
(22) Anmeldetag: 23.06.1992
(51) Int. Cl.: C04B 28/08, C04B 40/06, E02D 19/18

(54) **Verfahren zur Herstellung einer Dichtmasse**
Method for making impervious barrier mass
Procédé pour la fabrication d'une masse de paroi étanché

(30) Priorität: 01.07.1991 DE 4121776
(43) Veröffentlichungstag der Anmeldung: 28.06.1995
(62) Teilanmeldung aus: 92110575.5
(73) Patentinhaber: DYCKERHOFF AKTIENGESELLSCHAFT, D-65203 Wiesbaden (DE)
(72) Erfinder: Hermann, Adalbert, Dr., D-4540 Lengerich/Westfalen (DE)
(74) Vertreter: Patentanwälte Dr. Solf & Zapf

(56) Entgegenhaltungen:
- EP-A- 0 262 302
- EP-A- 0 361 614
- DE-A- 3 411 009
- DE-C- 613 037
- PATENT ABSTRACTS OF JAPAN vol. 6 no. 220 (M-169) ,5.November 1982 & JP-A-57 123322 (OBAYASHI GUMI KK)
- PATENT ABSTRACTS OF JAPAN vol. 013 no. 244 (M-834) ,7.Juni 1989 & JP-A-01 052912 (DENKI KAGAKU KK)
- PATENT ABSTRACTS OF JAPAN vol. 6 no. 167 (M-153) ,31.August 1982 & JP-A-57 081527 (SHIMODA KAZUO)
- CHEMICAL ABSTRACTS, vol. 111, no. 18, 30.Oktober 1989 Columbus, Ohio, US; abstract no. 159339z, K. KOIBUCHI ET AL. Seite 357;
- PATENT ABSTRACTS OF JAPAN vol. 5 no. 56 (M-066) ,30.April 1981 & JP-A-56 016725 (MAEDA KENSETSU KKK)
- CHEMICAL ABSTRACTS, vol. 99, no. 6, 8.August 1983 Columbus, Ohio, US; abstract no. 46243m, OHBAYASHI-GUMI Seite 257;

## Beschreibung

Die Erfindung betrifft ein Verfahren zur Herstellung einer Dichtmasse nach dem Oberbegriff des Anspruchs 1.

Bei der Herstellung von Dichtungsschlitzwänden werden Dichtwandmassen in Bodenschlitze eingebaut, z. B. als Vertikalelemente von Umschließungsvorhaben zur Verhinderung der Ausbreitung eventueller Bodenverunreinigungen über das Grundwasser oder in Baugruben oder Tagebaubetrieben als Wände zur Verringerung größerer Grundwasserabsenkungen und zu fördernder Grundwassermengen. Bei Versuchen mit Hilfe bohrtechnischer Methoden, wie z. B. abgelenkter Bohrungen, nachträglich Deponien und andere Altlasten auch horizontal abzudichten, werden besondere Anforderungen an Eigenschaften von Einphasen-Dichtmassen gestellt, wie z. B. sich über möglichst lange Zeiträume wenig verändernde rheologische Eigenschaften, hohe Fließgrenze, wenig Sedimentation, geringe Filtratwasserabgabe und spätes Erstarren, dessen Beginn erst zu einem möglichst spät zu bestimmenden Zeitpunkt einsetzen sollte, und besonders niedriger Wasserdurchlässigkeitsbeiwert bei niedrigen Druckfestigkeiten.

Während beim Zweiphasenverfahren zunächst mit einer reinen Bentonitsuspension als Stützflüssigkeit im ausgehobenen Erdschlitz gearbeitet wird und erst in einem zweiten Schritt das eigentliche Dichtungsmaterial, z.B. Beton oder bentonithaltiger Beton, im Kontraktorverfahren durch Verdrängung der Stützflüssigkeit eingebracht wird, ermöglicht das Einphasenverfahren durch Verwendung einer selbsterhärtenden Bentonit-Zement-Suspension die Lösung der Aufgabe bei vertikalen Schlitzwänden in besonders wirtschaftlicher Weise, wobei sichergestellt ist, daß Bentonite und die später Calziumsilikathydrat-Phasen bildende Hochofenschlacke optimal gleichmäßig verteilt sind.

Bei weitestgehend horizontalen Abdichtungen scheidet das Zweiphasenverfahren wegen der problematischen vollständigen Verdrängung der Bentonit-Stützsuspension durch eine später einzubringende Dichtsuspension aus.

Für das Einphasenverfahren sind aus der DE-PS 36 33 736 bzw. der korrespondierenden EP 0 262 302 A2 vorgefertigte Trockenmischungen auf der Basis von relativ teuren zementstabilen Bentoniten - gemahlener Hochofenschlacke (HOS) - wenig Portlandzement (oder anderen Hydroxylionen bildenden Anregern) - gegebenenfalls Zusätzen zur Verarbeitbarkeitsveränderung - gegebenenfalls Inerstoffzusätzen zur Erhöhung der Rohdichte bekannt. Diese vorgefertigten Trockenmischungen, die bevorzugt Portlandzement, CaO oder Ca(OH)₂ als Hydroxylionen bildende Anreger für die Hochofenschlacke aufweisen, werden in einem scherenden, intensiven Mischverfahren mit einer erforderlichen Wassermenge angemacht und in an sich bekannter Weise in einen Dichtwandschlitz eingebracht.

Es ist festgestellt worden, daß sich z.B. im Falle der Verwendung von Na-Bentonite oder preiswerter, aktivierter Ca-Bentonite und auch bei Verwendung relativ teurer zementstabiler Na-Bentonite und aktivierter Ca-Bentonite und Anregung durch Zement - vom Herstellungszeitpunkt der Trockenmischung an bis zum Gebrauchsbeginn (Anmachen der Suspension mit Wasser) die eingestellten Eigenschaften wie insbesondere die Viskosität, die Filtratwasserabgabe, das Erstarrungsverhalten, die Festigkeit und die Wasserdurchlässigkeit nicht ergeben. Der angemachte Schlamm ist meist zu dünnflüssig; die Filtratwasserabgaben und die Absetzungen sind erhöht; die Erhärtungsgeschwindigkeiten bis zum 28-Tage-Termin sind verringert und die Wasserdurchlässigkeits-Beiwerte können erhöht sein.

Zudem ist die Entwicklung der Festeigenschaften (Eigenschaften im verfestigten Zustand), wie die Erhärtungsgeschwindigkeit der bekannten Suspensionen, nur schwierig unterschiedlichen Anforderungen der Einbaustellen (Temperatur, erforderliche offene Zeit) anzupassen.

Ferner sind beispielsweise aus JP-A-57 12 322, JP-A-56 016 725 oder JP-A-57 08 1527 Dichtmassen bekannt, die jedoch nicht als Trockenmischungen vorgefertigt werden.

Aufgabe der Erfindung ist, ein Verfahren zur Herstellung einer Dichtmasse zur Verfügung zu stellen, dessen eingestellte Eigenschaften unabhängig vom Gebrauchsbeginn gewährleistet werden können, das unter anderem nicht zementstabilen Na-Bentonit bzw. nicht aktivierten Ca-Bentonit enthalten kann und somit unabhängig vom Bentonit-Typ ist und das ermöglicht, die Entwicklung der Festeigenschaften der Dichtwandmasse auf einfache Weise zu steuern.

Diese Aufgabe wird durch die Merkmale des Anspruchs 1 gelöst. Vorteilhafte Weiterbildungen der Erfindung werden in dem von diesem Anspruch abhängigen Unteransprüchen gekennzeichnet.

Im Rahmen der vorliegenden Erfindung wurde herausgefunden, daß sich die eingestellten Eigenschaften der bekannten vorgefertigten Trockenmischungen mit zunehmender Zeit und Lagertemperatur sowie Reaktionsfähigkeit der Hochofenschlacke verschlechtern und es wurde ein unkomplizierter Weg aufgefunden, die aufgrund von Mischungsverhältnissen eingestellten Eigenschaften zeitlich unbegrenzt zu gewährleisten und somit eine Verschlechterung der Eigenschaften zu vermeiden (diese Verschlechterung der Eigenschaften wird im folgenden mit "Verlagerung" bzw. "verlagern" bezeichnet). Erfindungsgemäß wird einer Verlagerung entgegengewirkt, indem Trockenmischungen auf der Basis
- Bentonit
- gemahlener Hochofenschlacke
- gegebenenfalls Zusätzen zur Verarbeitbarkeitsveränderung
- gegebenenfalls Inertstoffzusätzen zur Erhöhung der Rohdichte ohne Anreger hergestellt werden und Anreger frühestens beim Anmachen einer Suspension aus den genannten Stoffen oder zu einem beliebigen Zeitpunkt nach dem Anmachen einer Suspension aus den genannten Stoffen und nach dem Quellen des Bentonits zugesetzt werden. Dabei wird der Anreger vorzugsweise in Form einer wässrigen Lösung zugesetzt, z.B. in Form einer alkalihydroxidhaltigen Lösung, insbesondere einer NaOH-Lösung oder z.B. in Form einer Lösung, die ein Alkalihydroxid, z.B. NaOH, und mindestens eine andere Alkali-Verbindung enthält, die insbesondere ein Alkalisulfat, Alkalichlorid und/oder Alkalicarbonat sein kann. Die zuzusetzende Lösung enthält somit nach einer bevorzugten Ausführungsform der Erfindung einen Anreger in flüssiger Form. Eine besonders geeignete Lösung enthält NaOH und Na₂SO₄. Die Wirkung dieser Lösung ist relativ temperaturunabhlingig, d.h. sie wirkt in einem weiten Temperaturbereich in der Dichtwandmasse, z.B. im Bereich von 10 bis 30°C, unkritisch. Die Wirkung anderer Lösungen kann temperaturabhängiger sein, und zwar z.B. in Abhängigkeit vom Mischungsverhältnis zwischen NaOH und den anderen Alkaliverbindungen. Dabei kann diese Abhängigkeit auf einfache Weise empirisch ermittelt und den Suspensionstemperaturen angepaßt werden.

Im Falle der Verwendung von Alkali-Anregern kann erfindungsgemäß nahezu jeder Bentonit-Typ eingesetzt werden.

Die Entwicklung der Festeigenschaften der Dichtwandmasse kann auf einfache Weise dadurch gesteuert werden, daß der Anreger erst zu einem bestimmten Zeitpunkt zugesetzt wird und/oder daß die Anreger-Menge dabei auf die Entwicklung der Festeigenschaften der Dichtwandmasse abgestellt wird.

Es ist bekannt, Hochofenschlacke unter anderem auch mit einer Lösung aus NaOH, Na₂CO₃ oder Wasserglas zu aktivieren. Daß das Getrennthalten der erfindungsgemäß ausgewählten Alkali-Anreger von den anderen trocken vorgemischten Reaktionspartnern vor deren Verwendung und die Verwendung der Anreger insbesondere in Form von Lösungen und das Zugeben vorzugsweise zu einer bereits angemachten Suspension aus Bentonit und Hochofenschlacke sowie gegebenenfalls den Zusätzen besonders günstige Eigenschaften einer Dichtwandmasse gewährleisten, die nicht nur von der Reaktion der Anreger mit der Hochofenschlacke, sondern wohl auch von physikalisch-chemischen Eigenschaften insbesondere der vorgemischten Suspension zum Zeitpunkt der Zugabe abhängig sind, war aus dem Stand der Technik nicht zu erkennen und wohl auch nicht zu erwarten.

Bei Schlammtemperaturen bis 20°C erhält man auch nach einer Wartezeit von mehreren Tagen bis zur Zugabe einer Anregerlösung aus einer bis dahin gut aufrührbaren Suspension mit hoher Fließgrenze den gleichen Erstarrungs- bzw. Erhärtungsfortschritt nach der Zugabe, den man bei Zugabe der gleichen Lösung unmittelbar nach der Schlamm- bzw. Suspensionsherstellung erhält. Bei Temperaturen oberhalb etwa 20°C kann die Hydraulizität bestimmter Hochofenschlackenmehle allein in der Suspension bereits nach wenigen Tagen ohne chemische Anregung zum unkontrollierbaren Erstarrungsbeginn führen. Um dies zu unterdrücken und um die gleichen Eigenschaften zu erhalten wie bei Temperaturen unterhalb etwa 20°C, wird nach einer besonderen Ausführungsform der Erfindung ein Bentonit verwendet, dem Ca²⁺-Chelatbildner oder Ca²⁺-Fällmittel direkt bei der Bentonitherstellung bzw. -veredelung zugegeben wurden. Auf diese Weise kann der Erstarrungsbeginn der Suspension wirksam bis zum Zusetzen des Anregers unterdrückt werden.

Es ist bekannt, daß die zeitliche Entwicklung der Festeigenschaften, insbesondere die Wasserdurchlässigkeit, einer Dichtwandmasse temperaturabhängig ist. Nach dem erfindungsgemäßen Verfahren wird diese Abhängigkeit in überraschender Weise günstig beeinflußt.

Nach der Erfindung werden somit lose oder abgepackte Trockenmischungen hergestellt, bestehend aus bestimmten, auf die gewünschten Eigenschaften der Dichtwandmasse abgestellten Gehalten an Bentonit und Hochofenschlacke sowie gegebenenfalls an sich bekannten Zusätzen zur Verbesserung der Verarbeitbarkeit und gegebenenfalls an sich bekannten Inertzusätzen zur Erhöhung der Rohdichte und gegebenenfalls an sich bekannten Zusätzen zur Erhöhung der Dichtigkeit, wie z.B. reaktive Kieselsäure gemäß z.B. DE-OS 38 00 776. Diese Trockenmischungen können unbegrenzt trocken gelagert werden, ohne daß sie sich verändern bzw. ohne daß eine daraus hergestellte Dichtwandmasse andere als die vorbestimmten gewünschten Eigenschaften aufweist. Zum bestimmungsgemäßen Verbrauch wird im Falle der Verwendung von Alkali-Anregern eine Suspension aus der Trockenmischung und dem Anreger hergestellt. Vorzugsweise wird durch Vormischung zunächst aus der Trockenmischung unter Zusatz einer bestimmten Wassermenge in üblicher Weise z.B. durch scherendes Mischen eine Suspension hergestellt. Der Suspension kann unmittelbar nach dem Vormischen oder nach dem Quellen des Bentonits ein Alkali-Anreger in bestimmter Menge zugesetzt werden, so daß die Wirkung des Anregers sofort einsetzen kann und in einer bestimmten Zeit sich die gewünschten Eigenschaften der Dichtwandmasse entwickeln. Die gleiche Alkali-Anregermenge kann aber auch zu einem beliebigen späteren Zeitpunkt der gleichen Suspension zugemischt werden, so daß erst zum Zeitpunkt des späteren Zusetzens die Wirkung des Anregers beginnt und sich die gewünschten Eigenschaften der Dichtwandmasse in der gleichen Zeitspanne, gerechnet vom Zeitpunkt des Zusetzens, entwickeln.

Die Alkali-Anreger werden zum Verwendungszeitpunkt z.B. in Pulverform der Trockenmischung, vorzugsweise jedoch der Suspension oder dem Anmachwasser zugemischt.

Sehr viel günstiger ist jedoch das Zumischen in Form einer wässerigen Lösung aus mindestens einem Anreger dem Anmachwasser oder der Suspension, wobei besonders geeignet eine NaOH-Lösung ist. Gut geeignet sind auch Lösungen aus einem Alkalisalz, z.B. aus Na₂SO₄ und Lösungen aus zwei oder mehreren Alkalisalzen. Mit einer Lösung aus NaOH und einem Alkalisalz, insbesondere Na₂SO₄, können der Anregungsbeginn und -verlauf sowie die Entwicklung der gewünschten Eigenschaften der Dichtwandmasse besonders gut kontrollierbar eingestellt werden.

Im Rahmen der Erfindung kann die Anregung der Hochofenschlacke auch mit Zementklinkerbestandteilen, Erdalkalihydroxiden, insbesondere Ca(OH)₂ erfolgen. Es wurde festgestellt, daß sich selbst bei Verwendung von zementstabilen Bentoniten beim Anmachen der Suspension bis zum Erstarrungsbeginn der Filtratwasserabgabe fortlaufend deutlich erhöht. Dem kann erfindungsgemäß entgegengewirkt werden, indem zunächst eine Suspension ohne Anreger hergestellt und der Anreger erst nach dem Quellen des Bentonits zugesetzt wird. Eine andere Möglichkeit, dem entgegenzuwirken, besteht in der erfindungsgemäßen Verwendung von Alkali-Anregern.

Die Zusatzmenge an Anregern ist insbesondere abhängig von der Art, Feinheit und Menge der Hochofenschlacke sowie der Art und Menge des Bentonits sowie gegebenenfalls von der Art und Menge der sonstigen Zusatzstoffe und wird im wesentlichen empirisch ermittelt.

Die Erfindung schaltet die geschilderten Nachteile aus, die Anreger verursachen können, wenn sie in einer trockenen Vormischung vorhanden sind (Verlagerung). Die Erfindung ist jedoch auch anwendbar, wenn die Mischungspartner einzeln erst an der Einbaustelle der Dichtwandmasse zusammengesetzt und mit Wasser zu einer Suspension angemacht werden; dabei führt die Verwendung der Alkali-Anreger zur Vermeidung von erhöhten Filtratwasserabgaben und ermöglicht die Verwendung nahezu aller bekannter Bentonit-Typen. Bei Verwendung von Erdalkali-Ionen enthaltenden Anregern wird zweckmäßigerweise ein zementstabiler Bentonit oder ein Bentonit verwendet, der einen Ca²⁺-Chelatbildner oder ein Ca²⁺-Fällmittel aufweist. Der Anreger wird in diesem Fall erst nach dem Quellen des Bentonits zugesetzt.

In vielen Fällen, insbesondere bei üblicher Anwendungsrestfeuchte der aktivierten Ca-Bentonite, ist es vorteilhaft, die mögliche maximale Quellung des Bentonits dadurch zu erhalten, daß man zur Abfangung von Ca²⁺ und anderen mehrwertigen Kationen, die aus der gemahlenen Hochofenschlacke zum Bentonit übertreten können, zusätzlich und vorzugsweise bereits bei der Aufbereitung des Bentonits Chelatbildner für Ca²⁺-Ionen und ggf. andere mehrwertige Kationen und/oder Ca²⁺-Fällmittel zumischt.

Die Fällung von Ca²⁺ durch Alkalisalze, deren Anionen mit Ca unlösliche Verbindungen ergeben, ist an sich durch Patent 613037 bekannt.

Die folgenden Tabellen 1 und 2 enthalten Versuchsergebnisse, aus denen sich ergibt, daß die Zugabe der Anreger erst nach Zubereitung der Suspension aus den anderen Bestandteilen der Dichtwandmasse die überraschende Wirkung der Gewährleistung der gewünschten Eigenschaften der Dichtwandmasse bringt.

Die Ermittlung der Tabellenwerte erfolgte wie folgt:
Suspension-Anmachvorschrift gemäß DIN 4127 (August 1986) - Angaben in Abs. 6.1.1. Verwendet wurde ein 2 Liter-Chargen-Rührgerät mit 3.000 U/min⁻¹ Turbomischer. Die Rührzeit betrug 10 Minuten. Geometrie des Rührers und des Gefäßes entsprachen der DIN.
Marshzeit = Auslaufzeit aus dem Marshtrichter nach API RP 13 B (1982), Abs. 2.2 bis 2.4 für den Auslauf von 1,00 dm³
Filtratwasserabgabe im Filterpreßversuch nach DIN 4127 (August 1986) Abs. 6.4
Absetzen im 250 ml-Zylinder (definiert in API 10 (1990)) Abs. 6.1
"Erstarren"-Beginn und -Ende nach einer Hausmethode: Eindringen einer 9,7 g Stahlkugel bzw. Penetration mit einem Draht.
Druckfestigkeiten = einaxiale Druckfestigkeiten nach DIN 18136 nach fortlaufender Wasserlagerung bei den Versuchstemperaturen
Wasserdurchlässigkeitsbeiwert in Anlehnung an DIN 18139 (Nov. 1983) in der Abwandlung nach Meseck, Mitteilungen des Instituts für Grundbau und Bodenmechanik TU-Braunschweig, Heft Nr. 25 (1987) S. 109, nach jeweils dreitägiger Durchströmung und anschließender Weiterlagerung im Wasserbad.

Vergleicht man in Tabelle 1 die Hauptspalte 1.1 mit Spalte 1.02, so ergibt sich der Einfluß der Verlagerung wie folgt:

| | | |
|---|---|---|
| Zeile a2 | sofort dünnflüssiger | 31 statt 38 sec/1 |
| a3 | erhöhte Filtratwasserabgabe | 67 statt 40 ml |
| a4 | erhöhte Absetzneigung | 1,4 statt 0,7% |

verringerte Druckfestigkeit 7d: 0,6; 28d: 0,7 statt 1,0 und 1,1 N/mm²
vergrößerter k-Wert ca. 5 x E-10 statt 6 bzw. 2 x E-11
Daß die Filtratwasserabgabe üblicher vorgefertigter Dichtwandmassentrockenmischungen bis zum Erstarrensbeginn auch bei Nicht-Verlagerung fortlaufend deutlich verschlechtert wird, geht aus dem Vergleich der Zeilen a3 mit b3 in den Spalten 1.01; 1.02 und auch 1.1 hervor.

Aus Tabelle 2 geht hervor, daß man Anreger zu einem beliebigen Zeitpunkt in relativ weiten Zeitgrenzen zugeben kann, ohne daß die eingestellten Eigenschaften sich verändern. Damit wird die bisherige schwierige Anpassung an unterschiedliche Einbaustellen-Bedingungen bei Verwendung von Standardmischungen, denen Anreger im Herstellerwerk bereits zugegeben sind, vermieden (z.B. die Zugabe von Verzögern).

Eine verringerte Temperaturabhängigkeit der Festeigenschaften ergibt sich aus einem Vergleich der Werte in den Spalten 1.01 und 1.02 der Zeilen d3 und d6 mit den Werten der Spalten 3.01 und 3.02 bzw. der Spalten 2.01 und 2.02 in Tabelle 1.

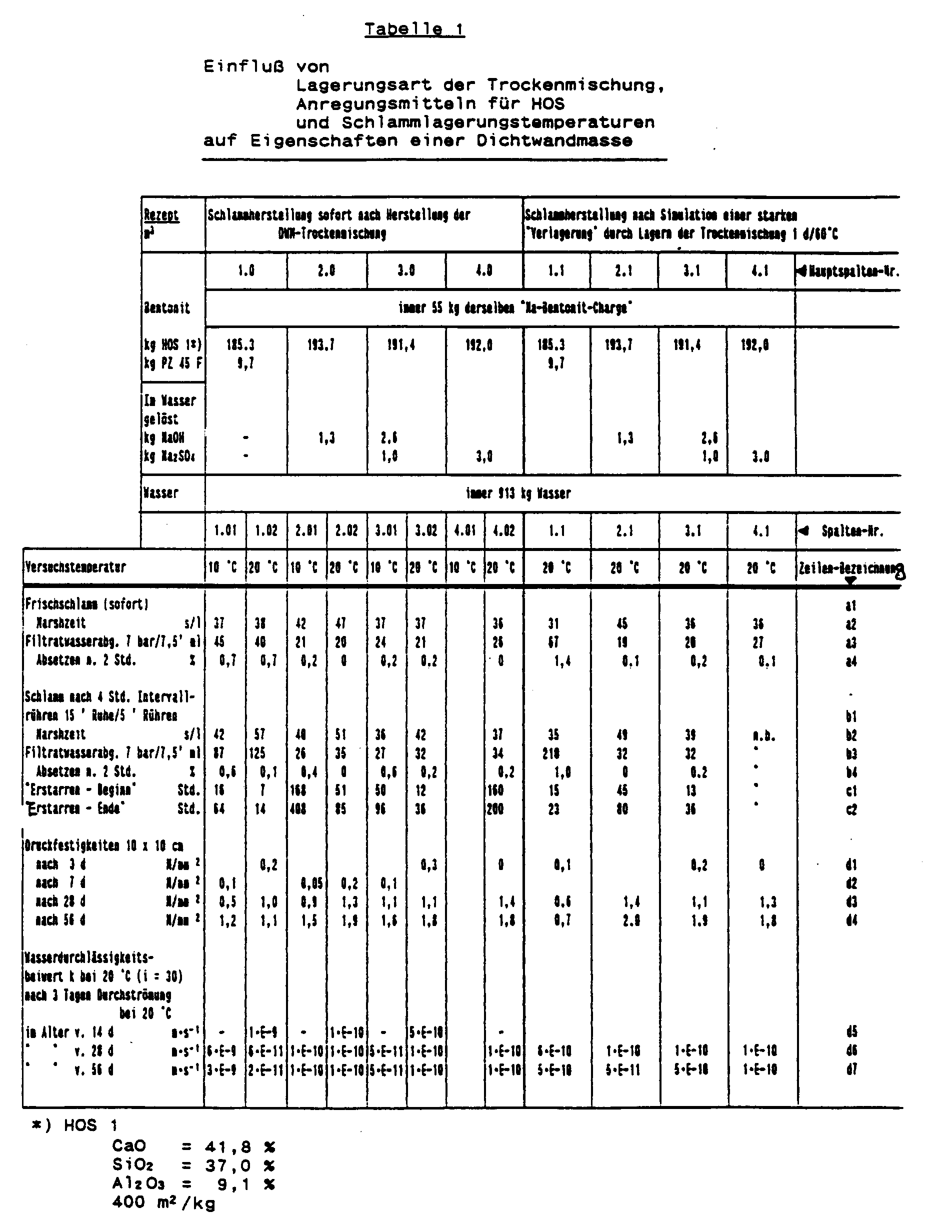

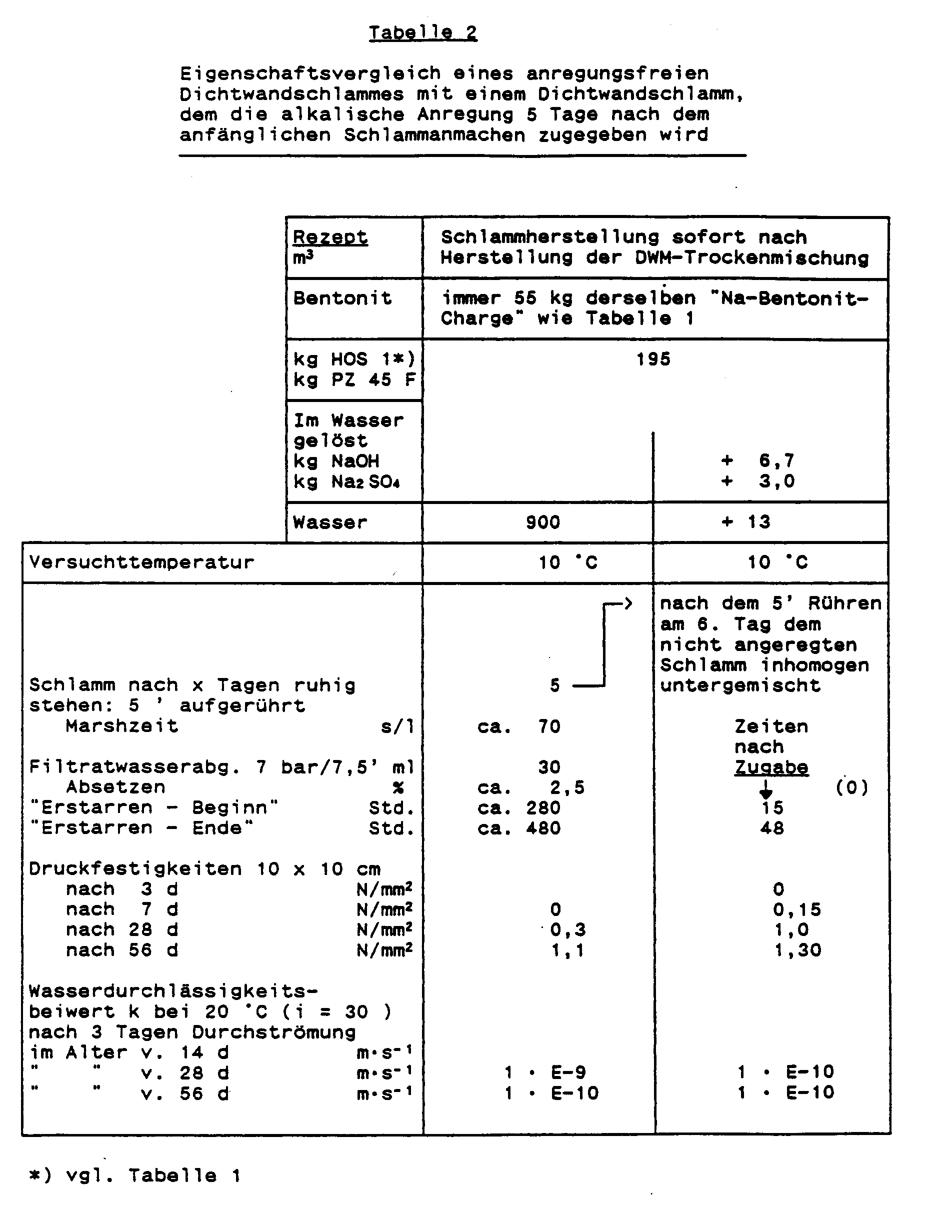

## Patentansprüche

1. Verfahren zur Herstellung einer Dichtmassen-Suspension, insbesondere für die Erstellung von Dichtschlitzwänden nach dem Einphasenverfahren, wobei Bentonit, gemahlene Hochofenschlacke, gegebenenfalls Zusätze zur Verbesserung der Verarbeitbarkeit, gegebenenfalls Inertstoff-Zusätze zur Erhöhung der Rohdichte, und mindestens ein Anreger für die Hochofenschlacke mit Wasser gemischt werden,
dadurch **gekennzeichnet,**
daß eine lagerungsstabile Trockenmischung, die im wesentlichen aus Bentonit und gemahlener Hochofenschlacke besteht, verwendet wird, wobei der Anreger für die Hochofenschlacke bis zum Anmachen der Suspension getrennt von der Trockenmischung gehalten wird.

2. Verfahren nach Anspruch 1,
dadurch gekennzeichnet,
daß ein nicht aktivierter Bentonit verwendet wird.

3. Verfahren nach Anspruch 1,
dadurch gekennzeichnet,
daß ein aktivierter Ca-Bentonit verwendet wird.

4. Verfahren nach Anspruch 3,
dadurch gekennzeichnet,
daß dem Ca-Bentonit vorzugsweise bereits bei der Aufbereitung Chelatbildner für Ca²⁺-Ionen und gegebenenfalls andere mehrwertige Kationen und/oder Ca²⁺-Füllmittel anstelle oder zusätzlich zu den an sich bekannten Aktivierungsmittel zugemischt werden.

5. Verfahren nach einem oder mehreren der Ansprüche 1 bis 4,
dadurch gekennzeichnet,
daß eine Trockenmischung mit an sich bekannten Zusätzen zur Verbesserung der Verarbeitbarkeit verwendet wird.

6. Verfahren nach einem oder mehreren der Ansprüche 1 bis 5
dadurch gekennzeichnet,
daß eine Trockenmischung mit an sich bekannten Inertstoff-Zusätzen zur Erhöhung der Rohdichte verwendet wird.

7. Verfahren nach einem oder mehreren der Ansprüche 1 bis 6,
dadurch gekennzeichnet,
daß eine Trockenmischung mit an sich bekannten Zusätzen zur Erhöhung der Dichtigkeit verwendet wird.

8. Verfahren nach einem oder mehreren der Ansprüche 1 bis 7,
dadurch gekennzeichnet,
daß ein Anreger in Pulverform verwendet wird.

9. Verfahren nach Anspruch 8,
dadurch gekennzeichnet,
daß als Anreger Zement verwendet wird.

10. Verfahren nach Anspruch 8,
dadurch gekennzeichnet,
daß als Anreger mindestens ein Erdalkalihydroxid verwendet wird.

11. Verfahren nach Anspruch 10,
dadurch gekennzeichnet,
daß ein Erdalkalihydroxid mit zwei- oder mehrwertigen Ionen verwendet wird.

12. Verfahren nach Anspruch 11,
dadurch gekennzeichnet,
daß als Anreger Ca(OH)₂ verwendet wird.

13. Verfahren nach Anspruch 8,
dadurch gekennzeichnet,
daß als Anreger eine Alkaliverbindung verwendet wird.

14. Verfahren nach Anspruch 13,
dadurch gekennzeichnet,
daß als Alkaliverbindung ein Alkalisalz verwendet wird.

15. Verfahren nach einem oder mehreren der Ansprüche 8 bis 14,
dadurch gekennzeichnet,
daß als Anreger mindestens zwei Anregerstoffe verwendet werden.

16. Verfahren nach einem oder mehreren der Ansprüche 1 bis 6,
dadurch gekennzeichnet,
daß als Anreger eine ein Alkali enthaltende wässrige Lösung verwendet wird, vorzugsweise mit einem pH-Wert über 11.

17. Verfahren nach Anspruch 16,
dadurch gekennzeichnet,
daß als Anreger eine ein Alkalihydroxid enthaltende Lösung, insbesondere eine NaOH-Lösung verwendet wird.

18. Verfahren nach Anspruch 16,
dadurch gekennzeichnet,
daß als Lösung eine Alkalisalzlösung verwendet wird.

19. Verfahren nach Anspruch 18,
dadurch gekennzeichnet,
daß als Lösung eine Na₂SO₄-Lösung verwendet wird.

20. Verfahren nach Anspruch 16,
dadurch gekennzeichnet,
daß ein Lösung mit zwei oder mehreren Alkalisalzen verwendet wird.

21. Verfahren nach Anspruch 16,
dadurch gekennzeichnet,
daß eine NaOH und mindestens ein Alkalisalz aufweisende Lösung verwendet wird.

22. Verfahren nach Anspruch 21,
dadurch gekennzeichnet,
daß eine NaOH und Na₂SO₄ aufweisende Lösung verwendet wird.

23. Verfahren nach einem oder mehreren der Ansprüche 1 bis 22,
dadurch gekennzeichnet,
daß der Anreger zu einem beliebigen Zeitpunkt der vorgemischten Suspension zugemischt wird.

24. Verfahren nach einem oder mehreren der Ansprüche 1 bis 23,
dadurch gekennzeichnet,
daß der Anreger erst nach dem Quellen des Bentonits zugesetzt wird.

25. Verfahren nach einem oder mehreren der Ansprüche 1 bis 24,
dadurch gekennzeichnet,
daß der Anreger dem Anmachwasser zugesetzt wird.

26. Verfahren nach einem oder mehreren der Ansprüche 1 bis 25,
dadurch gekennzeichnet,
daß Anreger mit Wasser vorgemischt wird.

## Claims

1. Process for making a suspension of an impervious compound, in particular for constructing impervious subterraneous curtains by the single-phase process, wherein there are mixed with water bentonite, ground blast furnace slag, optionally additives to improve the processability, optionally inert additives to increase the bulk density, and at least one activator for the blast furnace slag,
characterised in that there is used a dry mix which is stable in storage and substantially comprises bentonite and ground blast furnace slag, wherein the activator for the blast furnace slag is kept apart from the dry mix until the suspension is mixed.

2. Process according to Claim 1,
characterised in that a non-activated bentonite is used.

3. Process according to Claim 1,
characterised in that an activated calcium bentonite is used.

4. Process according to Claim 3,
characterised in that there are admixed to the calcium bentonite, preferably as early as during preparation, chelating agents for Ca²⁺ ions and optionally other polyvalent cations and/or Ca²⁺ fillers, in place of or in addition to the activating agents which are known per se.

5. Process according to one or more of Claims 1 to 4,
characterised in that a dry mix having additives which are known per se is used to improve the processability.

6. Process according to one or more of Claims 1 to 5,
characterised in that a dry mix having inert additives which are known per se is used to increase the bulk density.

7. Process according to one or more of Claims 1 to 6,
characterised in that a dry mix having additives which are known per se is used to increase the imperviousness.

8. Process according to one or more of Claims 1 to 7,
characterised in that a pulverulent activator is used.

9. Process according to Claim 8,
characterised in that cement is used as an activator.

10. Process according to Claim 8,
characterised in that at least one alkaline earth metal hydroxide is used as an activator.

11. Process according to Claim 10,
characterised in that an alkaline earth metal hydroxide having divalent or polyvalent ions is used.

12. Process according to Claim 11,
characterised in that Ca(OH)₂ is used as an activator.

13. Process according to Claim 8,
characterised in that an alkali metal compound is used as an activator.

14. Process according to Claim 13,
characterised in that an alkali metal salt is used as an alkali metal compound.

15. Process according to one or more of Claims 8 to 14,
characterised in that at last two activator substances are used as activators.

16. Process according to one or more of Claims 1 to 6,
characterised in that an aqueous solution which contains an alkali and preferably has pH > 11 is used as an activator.

17. Process according to Claim 16,
characterised in that a solution which contains an alkali metal hydroxide, in particular an NaOH solution, is used as an activator.

18. Process according to Claim 16,
characterised in that an alkali metal salt solution is used as the solution.

19. Process according to Claim 18,
characterised in that an Na₂SO₄ solution is used as the solution.

20. Process according to Claim 16,
characterised in that a solution having two or more alkali metal salts is used.

21. Process according to Claim 16,
characterised in that a solution exhibiting NaOH and at least one alkali metal salt is used.

22. Process according to Claim 21,
characterised in that a solution exhibiting NaOH and Na₂SO₄ is used.

23. Process according to one or more of Claims 1 to 22,
characterised in that the activator is admixed at any time to the pre-mixed suspension.

24. Process according to one or more of Claims 1 to 23,
characterised in that the activator is added only after swelling of the bentonite.

25. Process according to one or more of Claims 1 to 24,
characterised in that the activator is added to the mixing water.

26. Process according to one or more of Claims 1 to 25,
characterised in that activator is pre-mixed with water.

## Revendications

1. Procédé de préparation d'une suspension de matériau d'étanchéité, en particulier pour la réalisation d'un rideau sous-terrain étanche selon le principe monophase, selon lequel de la bentonite, du laitier haut fourneau moulu, le cas échéant des additifs pour l'amélioration de l'haptitude au façonnage, le cas échéant des additifs de matériaux inertes pour augmenter la masse volumique, et au moins un activateur pour le laitier de haut fourneau sont mélangés avec de l'eau, caractérisé en ce qu'un mélange sec, stable à l'entreposage, qui consiste essentiellement de bentonite et de laitier de haut fourneau moulu, est utilisé, l'activateur pour le laitier de haut fourneau étant maintenu séparé du mélange sec jusqu'à ce qu'on gâche la suspension.

2. Procédé selon la revendication 1, caractérisé en ce qu' une bentonite non-activée est utilisée.

3. Procédé selon la revendication 1, caractérisé en ce que de la bentonite-Ca activée est utilisée.

4. Procédé selon la revendication 3, caractérisé en ce qu'on mélange à la bentonite-Ca, de préférence déjà lors de sa préparation, des formateurs de chélates pour des ions Ca²⁺ et le cas échéant d'autre cations à plusieurs valences et/ou matières de remplissage - Ca²⁺ au lieu ou en supplément aux moyens activateurs connus en soi.

5. Procédé selon une ou plusieures des revendications 1 à 4, caractérisé en ce que un mélange sec avec des additifs connus en soi est utilisé pour améliorer l'hapitude au façonnage.

6. Procédé selon une ou plusieures des revendications 1 à 5, caractérisé en ce qu'un mélange sec avec des additifs de matières de remplissage connues en soi est utilisé pour augmenter la masse volumique.

7. Procédé selon une ou plusieures des revendications 1 à 6, caractérisé en ce qu' un mélange sec avec des additifs connus en soi pour augmenter l'étanchéité est utilisé.

8. Procédé selon une ou plusieures des revendications 1 à 7, caractérisé en ce qu' un activateur en forme de poudre est utilisé.

9. Procédé selon la revendication 8, caractérisé en ce que le ciment est utilisé comme activateur.

10. Procédé selon la revendication 8, caractérisé en ce qu'au moins un hydroxide alcalino-terreux est utilisé comme activateur.

11. Procédé selon la revendication 10, caractérisé en ce qu'un un hydroxide alcalino-terreux avec des ions à deux ou plusieurs valences est utilisé.

12. Procédé selon la revendication 10, caractérisé en ce que Ca(OH)₂ est utilisé comme activateur.

13. Procédé selon la revendication 8, caractérisé en ce qu'un composé alcalin est utilisé comme activateur.

14. Procédé selon une ou plusieures des revendications 8 à 14, caractérisé en ce qu'au un sel alcalin est utilisé comme composé alcalin.

15. Procédé selon une ou plusieures des revendications 8 à 14, caractérisé en ce qu'au moins deux matières activatrices sont utilisées comme activateur.

16. Procédé selon une ou plusieures des revendications 1 à 6, caractérisé en ce qu'une solution aqueuse contenant un alcalin est utilisée comme activateur, de préférence avec une valeur pH plus grande que 11.

17. Procédé selon la revendication 16, caractérisé en ce qu'une solution contenant une hydroxide alcalin, en particulier une solution NaOH, est utilisée comme activateur.

18. Procédé selon la revendication 16, caractérisé en ce qu'une solution de sel alcalin est utilisé comme solution.

19. Procédé selon la revendication 18, caractérisé en ce qu'une solution Na₂SO₄ est utilisée comme solution.

20. Procédé selon la revendication 16, caractérisé en ce qu'on utilise une solution avec deux ou plusieurs sels alcalins.

21. Procédé selon la revendication 16, caractérisé en ce qu'une solution contenant un NaOH et au moins un sel alcalin est utilisée.

22. Procédé selon la revendication 21, caractérisé en ce qu'une solution contenant NaOH et Na₂SO₄ est utilisée.

23. Procédé selon une ou plusieures des revendications 1 à 22, caractérisé en ce que l'activateur est ajouté en mélangeant à un moment quelconque à suspension pré-mélangé.

24. Procédé selon une ou plusieures des revendications 1 à 23, caractérisé en ce que l'activateur n'est ajouté qu'après le gonflement de la bentonite.

25. Procédé selon une ou plusieures des revendications 1 à 24, caractérisé en ce que l'activateur est ajouté à l'eau pour gâcher.

26. Procédé selon une ou plusieures des revendications 1 à 25, caractérisé en ce l'activateur est pré-mélangé avec d'eau.
